# FASCICULE DE BREVET EUROPEEN

(11) **EP 3 194 111 B1**
(45) Date de publication et mention de la délivrance du brevet: **16.05.2018**
(21) Numéro de dépôt: 15771168.0
(22) Date de dépôt: 26.08.2015
(51) Int. Cl.: B23P 15/00, F01D 9/04, F01D 11/12, F01D 25/24, B21D 22/06, B21D 53/16, B21D 53/92

(54) **PROCEDE DE FABRICATION DE SUPPORTS D'ANNEAUX D'ORGANE DE TURBOMACHINE**
VERFAHREN ZUR HERSTELLUNG EINES RINGTRÄGERS FÜR EIN TURBOMASCHINENELEMENT
METHOD FOR MANUFACTURING TURBOMACHINE MEMBER RING SUPPORTS

(30) Priorité: 28.08.2014 FR 1458079
(43) Date de publication de la demande: 26.07.2017
(73) Titulaire: SAFRAN AIRCRAFT ENGINES, 75015 Paris (FR)
(72) Inventeur: GIARDINI, Bruno, F-77550 Moissy Cramayel Cedex (FR); CHARRIER, Emmanuel, Bernard, Marie, F-77550 Moissy Cramayel Cedex (FR); HASCOET, Frédéric, F-77550 Moissy Cramayel Cedex (FR); SPIRE, Didier, F-77550 Moissy Cramayel Cedex (FR)
(74) Mandataire: Brevalex
(86) Numéro de dépôt international: PCT/FR2015/052275
(87) Numéro de publication internationale: WO 2016/030632

(56) Documents cités:
- EP-A1- 0 356 305
- EP-A2- 2 716 873
- DE-A1-102011 102 598
- JP-A- 2001 221 007
- US-A- 4 150 557
- US-A- 5 228 195

## Description

Le sujet de l'invention présente est un procédé de fabrication de supports d'anneaux d'organe de turbomachine selon le préambule de la revendication 1. Un tel procédé est connu du document EP 2 716 873 A2. Les supports d'anneaux d'organe de turbomachine considérés ici s'étendent sur des secteurs des troncs de cône s'étend un axe longitudinal dans un stator et reçoivent à leur face intérieure par rapport à l'axe longitudinal une garniture d'étanchéité pouvant être en nid d'abeille (dite « abradable »), qui entoure un étage circulaire d'aubes mobiles du rotor de la machine et sert à réduire les jeux. Les supports possèdent des parties d'assemblage à des structures adjacentes du stator et, en particulier, ce qu'on appelle un « rail », saillant à leur face extérieure par rapport à l'axe longitudinal.

On connaît plusieurs procédés de fabrication pour les fabriquer. Le premier d'entre eux est fondé sur le forgeage, mais il nécessite une machine puissante, des matrices de forgeage de formes complexes, et un travail à chaud pouvant imposer des précautions pour préserver la qualité de l'alliage, en empêchant, par exemple, l'apparition de calamine.

Dans un autre procédé, on recourt à un assemblage soudé ou brasé de tôles fines pour former le support. La résistance de l'assemblage peut toutefois être problématique, en raison des dilatations thermiques importantes auxquelles ces pièces sont soumises en service, et la fabrication peut rester compliquée.

On propose ici un procédé nouveau, qui permet de fabriquer de tels supports d'anneau de turbine avec seulement des opérations simples.

Sous une forme générale, l'invention concerne un procédé de fabrication de supports d'anneau d'organe de turbomachine, lesdits supports s'étendant sur des secteurs de tronc de cône, recevant une garniture d'étanchéité à une face intérieure et un rail de montage à une face extérieure opposée à la face intérieure, le rail de montage comprenant une dépression limitée par une collerette s'élevant dans une direction radiale extérieure du support, caractérisé en ce qu'il consiste, partant d'au moins une tôle plane ayant une épaisseur au moins égale à une distance entre la face intérieure et la face extérieure plus une hauteur de la collerette, à cintrer et souder ensemble la tôle ou les tôles en une virole cylindrique en cercle fermé, à conformer la virole cylindrique dans un outillage en virole conique, à usiner une face extérieure de la virole conique pour y façonner le rail, et à sectionner la virole conique pour la diviser en secteurs correspondant aux supports.

Les caractéristiques essentielles de l'invention sont, en d'autres termes, qu'on part de tôles épaisses dans lesquelles les reliefs des rails sont taillés, en renonçant à tout assemblage de tôles fines, tout en limitant au minimum les reprises d'usinage ; et qu'on procède à la fabrication simultanée d'un cercle des supports, au lieu de les fabriquer un à un. Plusieurs avantages sont alors obtenus, qu'on détaillera plus loin.

Le cintrage préliminaire de la tôle ou des tôles à une forme cylindrique peut s'effectuer par un outillage simple de déformation, de même que l'étape suivante de pressage et de conformation à une forme conique, en recourant à un appareil à mors multiples concentriques. La forme circulaire, fermée et régulière, de l'ébauche permet aussi des opérations d'usinage simple pour façonner le rail par le pressage puis l'usinage, ce dernier pouvant consister en un tournage.

Il est à noter que les étapes de cintrage et de conformation, qui n'impliquent pas de déformations importantes, peuvent être faites à froid, ce qui simplifie le procédé et évite de devoir considérer les conséquences d'un chauffage sur les propriétés finales de la pièce.

Les différents procédés de fabrication doivent respecter les cotes du produit demandé. Mais comme la dernière étape importante est ici un usinage, cette condition peut facilement être respectée ; certaines portions, comme la face intérieure qui n'est pas apparente mais reçoit la garniture d'étanchéité, peuvent toutefois rester brutes.

La fabrication à des cotes correctes est aussi plus facile à obtenir dans un mode de réalisation important de l'invention où les mors et la couronne statique ont les profils biconiques, symétriques autour d'un plan médian, de manière à conformer une virole doublement conique ou biconique, symétrique de part et d'autre d'un plan médian, ce qui tend à équilibrer les efforts axiaux appliqués, et les déformations de l'outillage.

Les différents aspects d'une réalisation purement illustrative de l'invention seront maintenant décrits plus en détails au moyen des figures suivantes :
- la figure 1 est une représentation d'un support connu ;
- la figure 2 illustre la tôle plane utilisée au départ de l'invention ;
- la figure 3, son cintrage en une virole cylindrique ;
- les figures 4 et 5, la presse d'emboutissage en une virole biconique selon deux directions de vue ;
- la figure 6, le choix d'un emboutissage en deux passes ;
- la figure 7, la façon dont l'usinage est mené ;
- les figures 8 et 9 sont des représentations d'un support de l'invention selon deux directions de vue ;
- et les figures 10 et 11 illustrent les extrémités latérales respectives du support connu et d'un support produit selon l'invention.

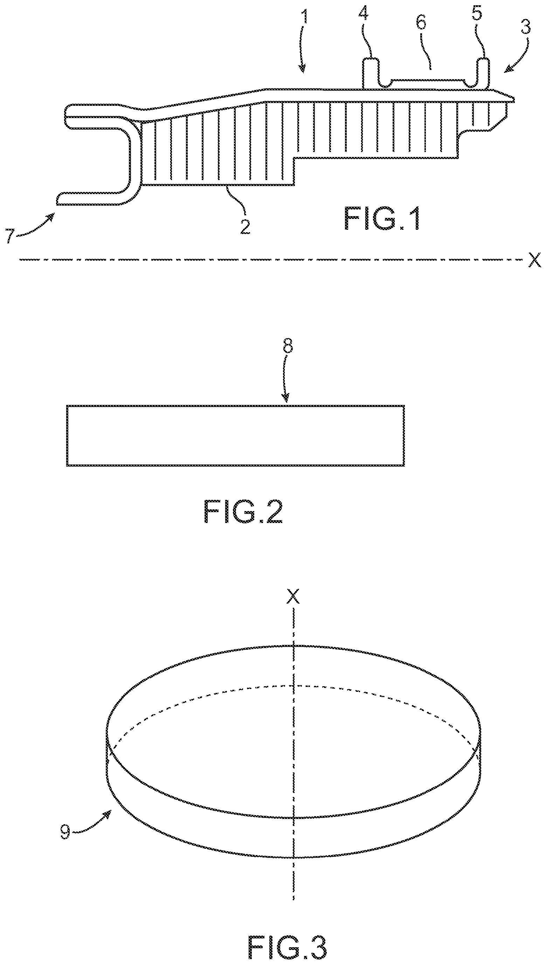

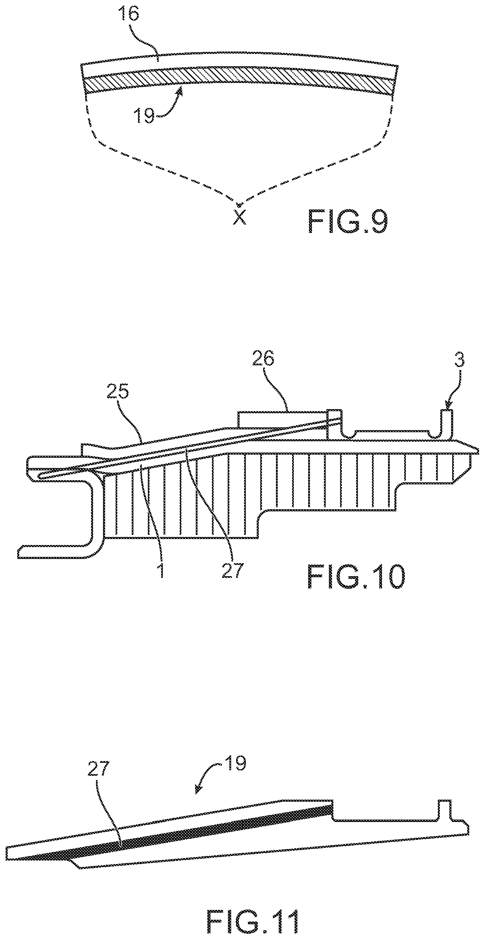

La figure 1 représente un support d'anneau de d'organe de turbomachine tel qu'une turbine construit par soudage et brasage de tôles fines, conformément à une technique connue. Une tôle principale 1 est de forme conique plus ou moins régulière sur un secteur angulaire, et comporte une face intérieure sur laquelle une garniture d'étanchéité 2, en nid d'abeille, abradable, est fixée ; sa face extérieure est munie d'un rail de montage 3 extérieur, constitué d'une deuxième tôle fine, recourbée de manière à présenter deux collerettes 4 et 5 saillantes, s'élevant en direction radiale extérieure, et une dépression 6 intermédiaire. Un autre rail de montage 7, également à section en U mais dont la concavité centrale est dirigée en direction axiale de la machine, est présent à une extrémité axiale. Les rails 3 et 7 sont tous deux brasés à la tôle principale 1. Ainsi qu'on l'a vu, la fabrication du support peut être compliquée et sa tenue imprévisible avec le temps et les nombreux cycles de déformations thermiques auxquels il sera soumis. La figure 10 illustre la forme particulière du support à chacune de ses extrémités angulaires : on y brase deux autres tôles 25 et 26 sur la face extérieure de la tôle principale 1, de manière à épaissir la section du support et à pouvoir exécuter un fentage 27 à sa face latérale, le fentage 27 étant destiné à recevoir, quand le support est monté et adjacent à un support semblable, une portion d'une tôle d'étanchéité couvrant le jeu entre les deux supports. Ces tôles 25 et 26 compliquent encore la fabrication du support. Dans la figure 1 comme dans d'autres, on a représenté l'axe X longitudinal de la machine où les supports seront montés, en s'ordonnant en cercles autour de cet axe X.

On aborde maintenant la description de l'invention en commençant par la figure 2. La matière première est constituée d'une tôle 8 plane, ou d'un petit nombre de telles tôles 8. La tôle 8 ou les tôles 8 passent par une installation de cintrage, qui permet de les courber jusqu'à obtenir une virole cylindrique 9 (figure 3), que l'on rend continue en fermant le cercle par soudage, après avoir abouté les bords d'extrémité. Il est préférable d'utiliser aussi peu de tôles 8 que possible et c'est pourquoi l'utilisation d'une paire ou d'un trio de tôles 8, dont chacune est courbée en demi-cercle ou en tiers de cercle, peut être un bon compromis ; mais une seule tôle 8 peut être courbée en cercle entier malgré son épaisseur.

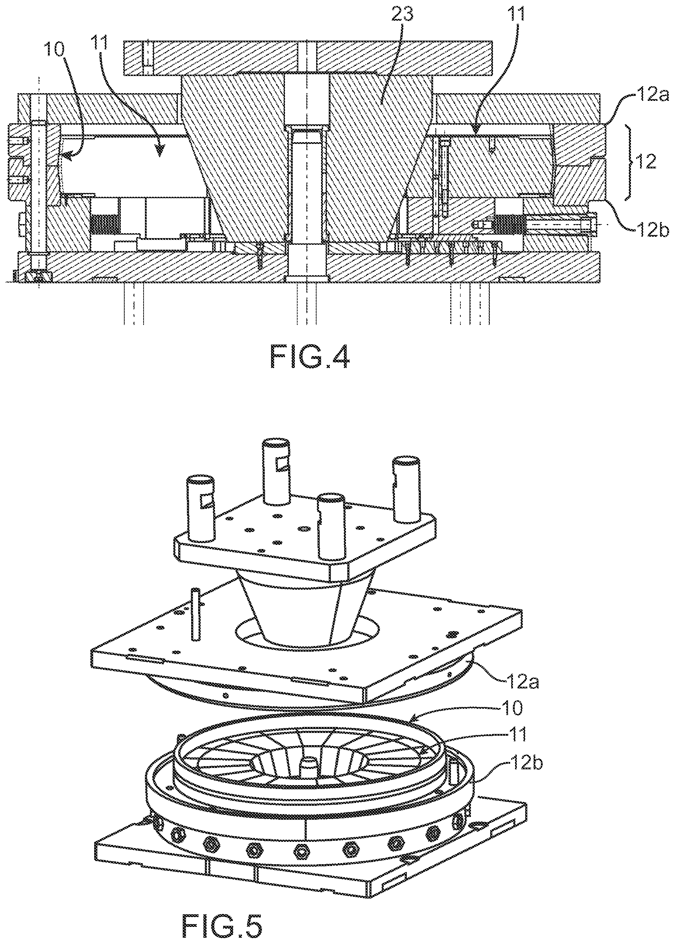

L'étape suivante, représentée aux figures 4 et 5, consiste à conformer la virole cylindrique 9 en une virole conique et, plus avantageusement, une virole biconique 10, de manière à suivre l'évolution de rayon dans la turbine. La virole cylindrique 9 est mise dans un équipement comprenant un outillage d'emboutissage tel qu'une presse comprenant une rangée circulaire de mors 11, à déplacement radial concomitant qu'une broche conique centrale 23 repousse ensemble, et une couronne 12 statique, qui leur fait face et leur est concentrique. La forme biconique est obtenue par une concavité de la couronne statique, et une saillie des mors 11, au centre. En déplaçant les mors 11 vers la couronne 12, la virole cylindrique 9 est déformée et prend la forme biconique souhaitée. L'emboutissage peut comporter une part d'expansion, qui augmente le rayon de la virole biconique 10. On remarque que la couronne 12 est formée de deux étages 12a et 12b superposés, qu'il est possible de séparer en levant l'étage 12a supérieur, pour introduire puis retirer les viroles 9 ou 10.

Il est utile d'éviter des déséquilibres excessifs d'efforts pendant cette opération, qui pourraient avoir pour conséquence la perte de bonnes cotes de fabrication. La forme circulaire de la presse permet une égalisation des efforts en direction angulaire ; et le déséquilibre des efforts en direction axiale de la virole 9 ou 10 peut être annulé, si l'outillage est comme ici symétrique de part et d'autre d'un plan médian, grâce au profil biconique des mors 11 et de la couronne 12.

Il est à noter que toutes ces étapes du procédé peuvent s'effectuer à froid, ce qui est permis par le faible niveau de déformation subi par la matière, aussi bien à l'étape de cintrage (la déformation étant répartie sur une grande longueur), qu'à l'étape de mise en conformation à une forme biconique.

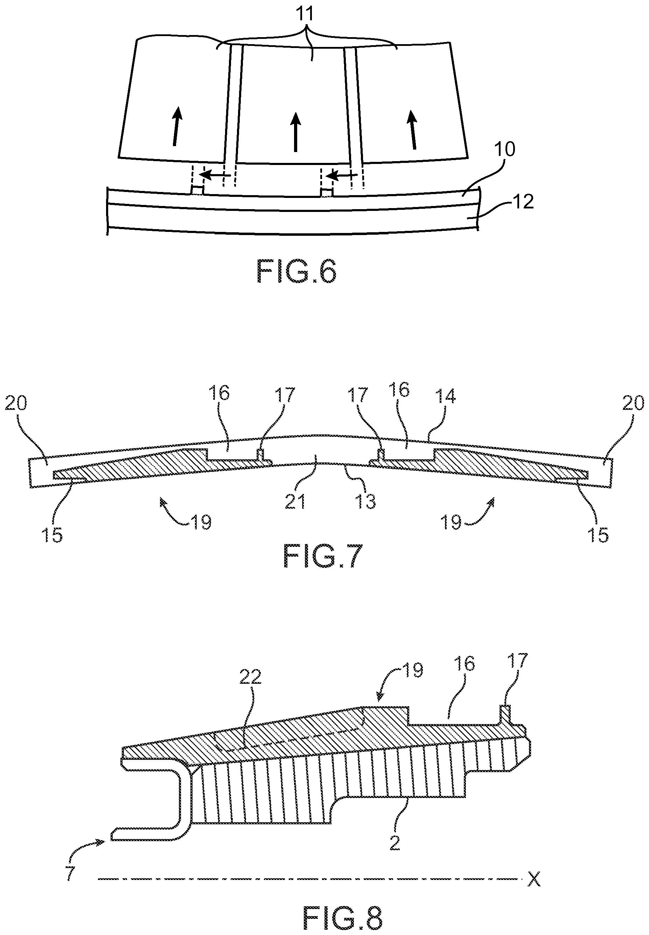

Cette étape de conformation par emboutissage sera en général faite en deux passes, à cause des discontinuités entre les mors 11 le long de la rangée circulaire ; après une première passe, la virole biconique 10 sera déplacée angulairement d'un pas entre mors 11 correspondant à quelques degrés, de manière à placer chaque portion du pourtour devant l'un des mors 11 à l'une ou l'autre des passes (figure 6) et uniformiser ainsi la circularité de la virole biconique 10, en éliminant les portions plates subsistant entre les mors 11 après la première passe.

La figure 7 illustre la forme de la virole biconique 10 en superposition à une paire des supports 19 à obtenir. Les opérations de fabrication consisteront maintenant en des usinages et notamment des tournages dans une machine à commande numérique classique. La forme biconique symétrique de la virole 10, conçue pour égaliser les efforts en direction axiale à presse d'emboutissage, ainsi qu'on l'a mentionné, est prévue pour donner un cercle des supports 19 à chacune de ses moitiés. La virole biconique 10 comprend une surface intérieure 13 et une face extérieure 14. La face intérieure 13 reste pour l'essentiel brute, exempte d'usinage sur au moins la plus grande partie de sa superficie, si ce n'est en creusant une échancrure 15 à une extrémité de chacun des supports 19, dans laquelle on installera le rail 7, maintenu depuis la conception antérieure. Un usinage complet de la face extérieure 14 sera au contraire entrepris, puisque les cotes des supports 19 doivent être précises et avec un bon état de surface à cet endroit, contrairement à la plus grande partie de la face intérieure 13, qui reçoit la garniture d'étanchéité 2 et n'est donc pas apparente ; on creusera en particulier une gorge 16 correspondant à la concavité 6 du rail 3 de la conception précédente, et on façonnera une collerette 17 semblable à la collerette 5, à l'extrémité de chacun des supports 19. Les dernières opérations consisteront en un croquage des extrémités 20 de la virole biconique 10, en une première étape de division de celle-ci de manière à séparer les deux cercles des supports 19, en enlevant complètement le centre 21, et en une découpe des deux cercles des supports 19, qu'on sectionne en secteurs angulaires, afin de séparer les supports 19 les uns des autres. Les fentages 27 sont exécutés aux extrémités latérales dans une étape finale, directement au milieu de l'épaisseur de la tôle (figure 11).

Les figures 8 et 9 illustrent un des supports 19 finalement obtenus, après qu'on y a installé le rail 7 et la garniture d'étanchéité 2. La portion comprenant la gorge 16 et la collerette 17, taillée dans la masse de la virole biconique 10, est aux mêmes cotes que la concavité 6 et la collerette 5 de la conception antérieure, de sorte que le support 19 pourra parfaitement remplacer le support 1. Il est à noter que, formé d'une tôle 8 plus épaisse que la tôle du support 1, le support 19 sera plus lourd. Cet inconvénient peut toutefois être atténué en creusant sa face extérieure par des fraisages 22 au centre, sans atteindre la gorge 16. Les fraisages 22 sont discontinus et ne concernent pas les bords des supports 19.

Le remplacement du rail 3 rapporté par une portion monobloc du support 19 contribue à la cohésion de celui-ci. Le procédé de fabrication peut être accompli avec simplicité, et il conduit de façon fiable à des cotes correctes. Les reprises d'usinage sont ainsi réduites à un minimum.

## Revendications

1. Procédé de fabrication de supports (19) d'anneau d'organe de turbomachine tel qu'une turbine, lesdits supports s'étendant sur des secteurs de tronc de cône, recevant une garniture d'étanchéité (2) à une face intérieure et un rail de montage à une face extérieure opposée à la face intérieure, le rail de montage comprenant une dépression (16) limitée par une collerette (17) s'élevant dans une direction radiale extérieure du support (19), **caractérisé en ce qu'**il consiste, partant d'au moins une tôle plane (8) ayant une épaisseur au moins égale à une distance entre la face intérieure et la face extérieure plus une hauteur de la collerette, à cintrer et souder ensemble la tôle ou les tôles en une virole cylindrique (9) en cercle fermé, à conformer la virole cylindrique dans un outillage en une virole conique (10), à usiner une face extérieure (14) de la virole conique pour y façonner le rail, et à sectionner la virole conique pour la diviser en secteurs correspondant aux supports (19).

2. Procédé de fabrication selon la revendication 1, **caractérisé en ce que** les étapes consistant à cintrer et à conformer sont faites à froid.

3. Procédé de fabrication selon la revendication 1 ou 2, **caractérisé en ce que** l'outillage dans lequel la virole cylindrique est conformée comprend une rangée circulaire de mors (11) à expansion radiale et une couronne statique (12) extérieure entourant la rangée circulaire.

4. Procédé de fabrication selon la revendication 3, **caractérisé en ce que** la virole cylindrique (9) est conformée dans l'outillage en deux passes d'expansion des mors, et tournée entre les deux passes d'expansion d'un pas angulaire entre les mors (11).

5. Procédé de fabrication selon l'une quelconque des revendications 3 ou 4, **caractérisé en ce que** les mors et la couronne statique ont des profils biconiques symétriques autour d'un plan médian, et la virole conique (10) est biconique.

6. Procédé de fabrication selon l'une quelconque des revendications 1 à 5, **caractérisé en ce que** la face intérieure (13) des supports reste exempte d'usinage au moins sur une plus grande partie de sa superficie.

7. Procédé de fabrication selon l'une quelconque des revendications 1 à 6, **caractérisé en ce que** l'usinage de la face extérieure de la virole conique comporte un tournage qui façonne le rail, et des fraisages (22) discontinus, à des portions centrales des supports (19).

8. Procédé de fabrication selon l'une quelconque des revendications 1 à 7, **caractérisé en ce que** les tôles sont au nombre de deux ou trois.

## Patentansprüche

1. Verfahren zur Herstellung von Ringträgern (19) für ein Turbotriebwerkselement wie beispielsweise eine Turbine, wobei die genannten Träger sich über Kegelstumpf-Sektoren erstrecken und eine Dichtung (2) an einer Innenseite und eine Einbauschiene an einer Außenseite, die sich auf der von der Innenseite abgewandten Seite befindet, aufnehmen, wobei die Einbauschiene eine Vertiefung (16) enthält, die von einem Kragen (17) begrenzt wird, der in radialer Richtung zur Außenseite des Trägers hin hervorsteht,
**dadurch gekennzeichnet,**
**dass** es, ausgehend von mindestens einem ebenen Blech (8) mit einer Stärke, die mindestens gleich einer Distanz zwischen der Innenseite und der Außenseite plus einer Höhe des Kragens ist, darin besteht, das Blech oder die Bleche zu einem zylindrischen Ring (9) in geschlossenem Kreis zu biegen und zusammenzuschweißen, den zylindrischen Ring in einem Werkzeug zu einem konischen Ring (10) zu formen, eine Außenseite (14) des konischen Rings zu bearbeiten, um dort die Schiene zu formen, und den konischen Ring zu unterteilen, um ihn in Abschnitte aufzuteilen, die den Trägern (19) entsprechen.

2. Herstellungsverfahren nach Anspruch 1,
**dadurch gekennzeichnet,**
**dass** die Arbeitsschritte, die darin bestehen, zu biegen und zu formen, kalt erfolgen.

3. Herstellungsverfahren nach Anspruch 1 oder 2,
**dadurch gekennzeichnet,**
**dass** das Werkzeug, in dem der zylindrische Ring geformt wird, eine kreisförmige Reihe von Backen (11) zum radialen Ausfahren sowie einen äußeren statischen Kranz (12), der um die kreisförmige Reihe herum angeordnet ist, aufweist.

4. Herstellungsverfahren nach Anspruch 3,
**dadurch gekennzeichnet,**
**dass** der zylindrische Ring (9) in dem Werkzeug in zwei Arbeitsgängen des Ausfahrens der Backen geformt wird und zwischen den Vorgängen des Ausfahrens zwischen den Backen (11) um einen Teilwinkel gedreht wird.

5. Herstellungsverfahren nach einem der Ansprüche 3 oder 4,
**dadurch gekennzeichnet,**
**dass** die Backen und der statische Kranz doppelkonische Profile haben, die um eine Mittelebene symmetrisch sind, und der konische Ring (10) doppelkonisch ist.

6. Herstellungsverfahren nach einem der Ansprüche 1 bis 5,
**dadurch gekennzeichnet,**
**dass** die Innenseite (13) der Träger frei von Bearbeitung bleibt, zumindest über einen größeren Teil ihrer Oberfläche.

7. Herstellungsverfahren nach einem der Ansprüche 1 bis 6,
**dadurch gekennzeichnet,**
**dass** die Bearbeitung der Außenseite des konischen Rings ein Drehen zur Formung der Schiene sowie unterbrochenes Fräsen (22) in zentralen Abschnitten der Träger (19) umfasst.

8. Herstellungsverfahren nach einem der Ansprüche 1 bis 7,
**dadurch gekennzeichnet,**
**dass** die Bleche zwei oder drei an der Zahl sind.

## Claims

1. Method of manufacturing ring supports (19) for a member of a turbomachine such as a turbine, said supports extending around frusto-conical sectors on which a sealing lining (2) is fitted on an inner face and a mounting rail is fitted on an outer face opposite the inner face, the mounting rail including a depression (16) limited by a collar (17) rising along a radially outwards direction from the support (19), **characterised in that** it consists of, starting from at least one plane metal sheet (8) with a thickness at least equal to a distance between the inner face and the outer face plus a height of the collar, bending and welding the plate or plates together to form a closed circular cylindrical shroud (9), bending the cylindrical shroud in tooling to form a conical shroud (10), machining an outer face (14) of the conical shroud to form the rail on it, and cutting the conical shroud shell to divide it into sectors corresponding to the supports (19).

2. Manufacturing method according to claim 1, **characterised in that** the steps consisting of bending and shaping are done cold.

3. Manufacturing method according to claim 1 or 2, **characterised in that** the tooling in which the cylindrical shroud is shaped comprises a circular row of jaws (11) with radial expansion and an outer static ring (12) surrounding the circular row.

4. Manufacturing method according to claim 3, **characterised in that** the cylindrical shroud (9) is shaped in the tool in two jaw expansion passes, and is turned by an angular step between the jaws (11) between the two expansion passes.

5. Manufacturing method according to either claim 3 or 4, **characterised in that** the jaws and the static ring have biconical profiles symmetric about a median plane, and the conical shroud (10) is biconical.

6. Manufacturing method according to any one of claims 1 to 5, **characterised in that** the inner face (13) of the supports is unmachined over most of its surface area.

7. Manufacturing method according to any one of claims 1 to 6, **characterised in that** machining of the outer face of the conical shroud comprises a turning that shapes the rail, and discontinuous milling operations (22), at central portions of the supports (19).

8. Manufacturing method according to any one of claims 1 to 6, **characterised in that** there are two or three plates.
